# EUROPÄISCHE PATENTSCHRIFT

(11) **EP 1 561 118 B1**
(45) Veröffentlichungstag und Bekanntmachung des Hinweises auf die Patenterteilung: **24.06.2015**
(21) Anmeldenummer: 03767538.6
(22) Anmeldetag: 13.11.2003
(51) Int. Cl.: G01P 3/487

(54) **ANORDNUNG ZUR ERFASSUNG DER DREHBEWEGUNG EINER WELLE**
SYSTEM FOR DETECTING THE ROTATIONAL MOTION OF A SHAFT
SYSTEME POUR DETECTER LE MOUVEMENT DE ROTATION D'UN ARBRE

(30) Priorität: 13.11.2002 DE 10253122
(43) Veröffentlichungstag der Anmeldung: 10.08.2005
(73) Patentinhaber: Carl Freudenberg KG, 69469 Weinheim (DE)
(72) Erfinder: KAMMERER, Eric, F-5220 Langres (FR); LUTAUD, Dominique, FR-52360 Orbigny au Mont (FR)
(86) Internationale Anmeldenummer: PCT/EP2003/012695
(87) Internationale Veröffentlichungsnummer: WO 2004/044593

(56) Entgegenhaltungen:
- EP-A- 0 594 550
- WO-A-98/11356
- FR-A- 2 833 663
- PATENT ABSTRACTS OF JAPAN vol. 2002, no. 06, 4. Juni 2002 (2002-06-04) -& JP 2002 053019 A (NTN CORP), 19. Februar 2002 (2002-02-19)

## Beschreibung

### Technisches Gebiet

Die Erfindung betrifft eine Anordnung zur Erfassung der Drehbewegung einer Welle mit einem mit der Welle verbundenen Messwertgeber, mindestens einem am Maschinengehäuse vorhandenen Messwertaufnehmer sowie einem an dem Messwertaufnehmer angeschlossenen Messwertumformer.

### Stand der Technik

Durch die EP 0 984 286 A1 ist eine Dichtungsanordnung bekannt geworden, bei der der zwischen einem Gehäuse und einer Welle befindliche Spalt durch einen Dichtring abgedichtet wird. Neben dem Dichtring ist auf die Welle ein Multipolring aufgesetzt, der mit einem am Maschinengehäuse angebrachten Messsensor zusammenwirkt. Durch den Messsensor können beispielsweise die Drehzahl der Welle gemessen werden. Die gemessenen Werte werden über ein Elektrokabel an eine Steuereinheit und/oder ein Display oder dergleichen weitergeleitet.

Auch die DE 43 12 424 C2 zeigt eine Möglichkeit für die Unterbringung eines Dichtrings und einer Drehzahlgebereinrichtung zur Abdichtung einer Wellendurchführung in einer stirnseitigen Außenwand eines Gehäuses. Außerdem sind in der älteren DE 101 49 642.7 eine Reihe von Ausbildungsformen für Dichtringe in Verbindung mit Sensorgehäusen dargestellt.

Allen bekannten Ausführungen zum Stand der Technik ist gemeinsam, dass die Messwertaufnehmer, d.h. die Sensoren von Außen mit Strom zu versorgen sind und dass die Messwerte ebenfalls über ein Kabel an ein Display und/oder eine Steuereinheit abzugeben sind. Das beziehungsweise die Kabel erfordern eine Steckverbindung, welche die Signalgenauigkeit mindert. Außerdem benötigen sie Einbauraum und eine gute Zugänglichkeit insbesondere für den Reparaturfall. Die Zugänglichkeit erfordert im Regelfall weiteren Einbauraum.

Eine Möglichkeit die Messvorrichtung durch einen gesonderten Generator mit Energie zu speisen ist der EP0594550 zu entnehmen. Die WO98/11356 zeigt einen Lageraufbau eines Radlagers, der einen elektrischen Generator, welcher ein Mittel zum Detektieren der Anzahl von Umdrehungen aufweist.

### Darstellung der Erfindung

Der Erfindung liegt die Aufgabe zugrunde eine gegenüber dem Stand der Technik verbesserte Ausführungsform zu schaffen, welche eine kompakte Bauweise mit sehr geringem Bedarf an Einbauraum hat, eine sehr gute Signalgenauigkeit ergibt, einfach und kostengünstig herzustellen ist und einen möglichst geringen Montageaufwand erfordert.

Die Lösung der gestellten Aufgabe erfolgt mittels einer Anordnung gemäß Anspruch 1.

### Kurzbeschreibung der Zeichnung

Anhand von mehreren Ausführungsbeispielen wird die Erfindung nachstehend näher erläutert.

Es zeigt:
Fig. 1 schematisch eine Anordnung im Querschnitt,
Fig. 2 die Sensorik in der Draufsicht und
Fig. 3 eine Erfindungsgemäße Ausbildung der Anordnung im Querschnitt.

### Ausführung der Erfindung

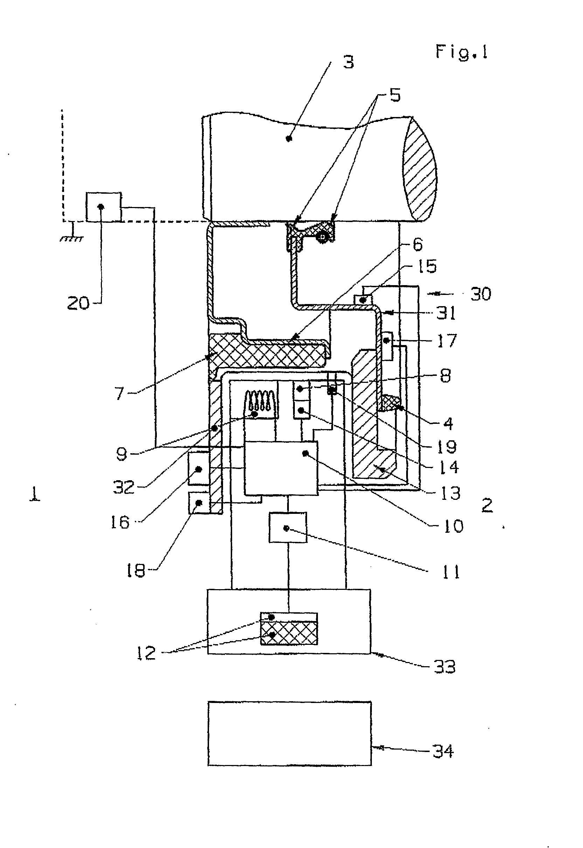

In der Figur 1 ist ein den technischen Hintergrund repräsentierendes Beispiel, das jedoch kein Ausführungsbeispiel der Erfindung im Zusammenwirken mit einer Dichtung dargestellt. Zur Abdichtung eines Spalts zwischen der Welle 3 und einem nicht näher gezeigten Gehäuse mit dem Verschlussdeckel 13 ist die Dichtungsanordnung 30 vorgesehen. Die Dichtungsanordnung 30 kann beliebiger Bauart sein. Im vorliegenden Beispiel besteht sie aus dem Dichtring 31, der am Verschlussdeckel 13 befestigt ist. An der Befestigungsstelle zwischen Dichtring 31 und Verschlussdeckel 13 ist eine statische Dichtung 4 aus einem polymeren Material vorgesehen. Die dynamische Dichtung 5 an der Welle 3 wird durch einen Polymereinsatz gebildet, der mit zwei Dichtlippen ausgestattet ist und durch einen Schraubenzugfederring zusätzlich an die Welle 3 gedrückt wird. Mit der Welle 3 fest verbunden ist der Trägerring 6, an dem der Multipolring 7 befestigt ist. Der Multipolring 7 ist bekannter Bauart.

Dem Multipolring 7 in radialer Richtung gegenüberliegend ist der Messsensor 8 im Maschinengehäuse 32 untergebracht. Der Messsensor 8 ist über einen Messwertumformer 14 und den Regler 10 mit der eigenen Stromquelle 11 bzw. dem Energiespeicher verbunden. Die Stromquelle 11 speist gleichzeitig die Signalsendeeinheit 33, die mit dem Antennenschaltkreis 12 ausgestattet ist. Die von der Signalsendeeinheit 33 ausgesandten Signale werden von der gesondert im Gehäuse 32 untergebrachten Steuereinrichtung 34 empfangen und dort entsprechend weiterverarbeitet. Als Stromquelle 11 wird eine Elektrobatterie eingesetzt. Mit der Elektrobatterie verbunden ist der Stator 9, der in Verbindung mit dem Multipolring 7 als Stromversorger für die Elektrobatterie 11 dient. Multipolrad 7 und Stator 9 sind zur Stromerzeugung entsprechend ausgestaltet. Der Regler 10 dient zur entsprechenden Ausregelung des elektrischen Stroms oder auch der Messsignale von den Sensoren 8. Neben dem Sensor 8 ist noch der Sensor 15 zur Messung des Drucks im abzudichtenden Raum 2, der Sensor 16 zur Messung des Drucks in der Umgebung 1, sowie die Sensoren 17 und 18 zur Messung der Temperaturen im abzudichtenden Raum 2 beziehungsweise in der Umgebung 1 vorgesehen. Darüber hinaus kann auch noch der Sensor 19 als Messwertgeber für die Leckage eingefügt werden. Schließlich ist noch der Sensor 20 als Messwertgeber für das Drehmoment an der Welle 3 befestigt. Eine derart ausgebildete Dichtungsanordnung 30 ergibt eine drahtlose Signalübermittlung von den im Bereich der Welle 3 untergebrachten Sensoren zur Steuereinrichtung 34 der Maschine. Zuführungskabel für Strom und Verbindungskabel für Signale entfallen. Die Störanfälligkeit wird erheblich reduziert und die Übertragung für unterschiedliche Messgrößen für den gleichen Antennenschaltkreis kann problemlos durchgeführt werden. Die Bauteile der Sensorik sind an ihrem jeweiligen Träger vorzugsweise mit geeigneten Befestigungsmitteln wie z.B. Schrauben zerstörungsfrei lösbar gehalten. Sie können aber auch angenietet, eingespannt, angeklebt, eingeklipst oder eingegossen sein.

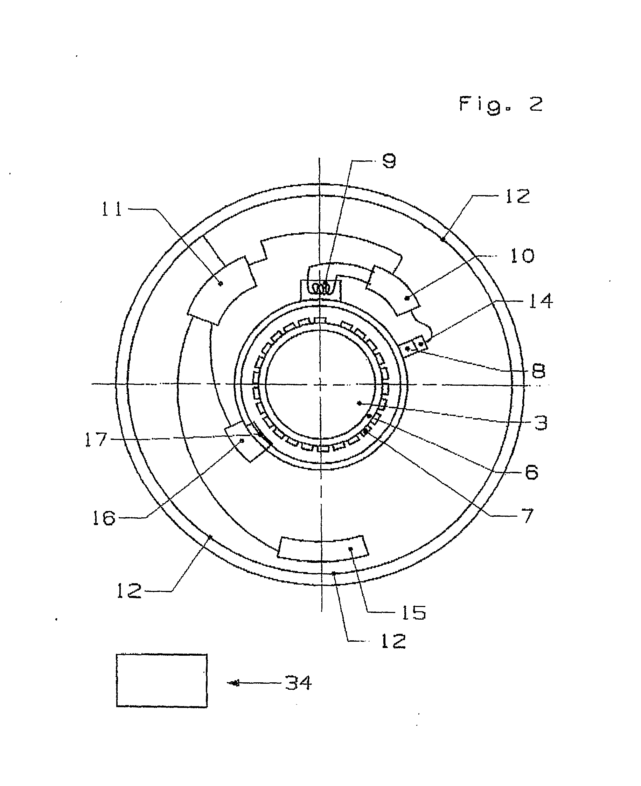

In der Fig. 2 ist schematisch die örtliche Plazierung der wichtigsten Teile der Messanordnung dargestellt. Mit der Welle 3 verbunden ist das Multipolrad 7 über den Trägerring 6. Der Stator 9 ist am Maschinengehäuse befestigt und der in ihm erzeugte Strom wird vom Regler 10 aus geregelt und an den Sensor 8 über den Messwertumformer 14 weitergeleitet. Gleichzeitig wird die Stromquelle 11 bedient, die ihrerseits weitere Sensoren 15, 16 und 17 versorgt. Über den Antennenschaltkreis 12 wird die Steuereinrichtung 34 mit Signalen versehen.

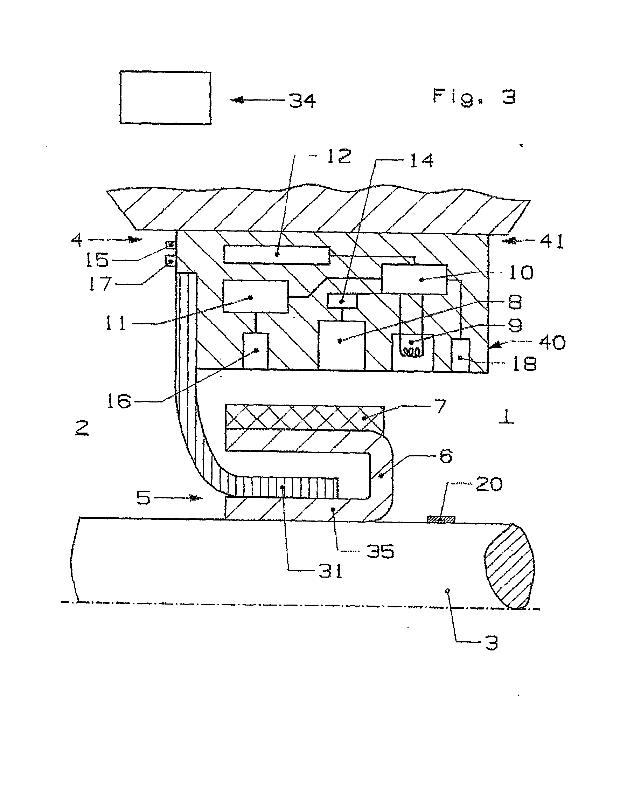

In der Fig. 3 ist im Querschnitt eine Ausführungsform der Anordnung gemäß der vorliegenden Erfindung gezeigt. Hier ist die gesamte Sensorik einschl. Stromerzeugung und Signalübermittlung in dem Block 40 zusammengefasst, der in einer Gehäusebohrung 41 eingesetzt ist. Die verwendeten Bezugszeichen entsprechen den Bezugszeichen aus der Fig. 1. In diesem Beispiel wird eine andere Dichtung verwendet, die jedoch ebenfalls integral mit dem Block 40 verbunden ist. Es handelt sich hier um einen Kombiring, bei dem der Dichtring 31 auf einem auf der Welle 3 aufgesetzten Gegenring 35 aufliegt.

## Patentansprüche

1. Messanordnung zur Erfassung der Drehbewegung einer Welle (3) in einem Maschinengehäuse mit einem mit der Welle (3) verbundenen Multipolring (7), mindestens einem am Maschinengehäuse vorhandenen , mit dem Multipolring (7) zusammenwirkenden Messwertaufnehmer (8) sowie einem an dem Messwertaufnehmer (8) angeschlossenen Messwertumformer, (14) wobei der beziehungsweise die Messwertaufnehmer ausgebildet sind, durch mindestens einen eigenen Energiespeicher mit Strom gespeist zu werden und die Stromerzeugung für den Energiespeicher durch den mit der Welle verbundenen Multipolring im Zusammenwirken mit einem gegenüberliegenden Stator erfolgt, **dadurch gekennzeichnet, dass** die Messanordnung weitere Messwertaufnehmer (15 bis 20) umfasst, die zur Messung des Drucks (15, 16) und/oder der Temperatur (17, 18) im abzudichtenden Raum (2) und/oder der Umgebung (1) und/oder der Leckage (19) und/oder des Drehmoments (20) dienen, und mit einem Regler (10), Energiespeicher (11) und einer Sendeeinheit (33) sowie der zur Abdichtung des Spalts zwischen der Welle und dem Maschinengehäuse an der Welle anliegenden Dichtung (31) integral zu einer Baueinheit (40) zusammengefasst sind.

2. Anordnung nach Anspruch 1, **dadurch gekennzeichnet, dass** der elektrische Strom über einen im Stromkreis eingesetzten Regler (10) geregelt wird.

3. Anordnung nach einem der Ansprüche 1 oder 2, **dadurch gekennzeichnet, dass** eine Signalsendeeinheit (33) zur drahtlosen Übermittlung der Messwerte an eine gesondert vorhandene elektronische Steuereinrichtung (34) vorgesehen ist.

4. Anordnung nach einem der Ansprüche 1 bis 3, **dadurch gekennzeichnet, dass** ein Messwertumformer (14) zur Umwandlung des sinusförmigen Messsignals aus der Drehbewegung der Welle (3) in ein Ja/Nein-Signal vorgesehen ist.

5. Anordnung nach einem der Ansprüche 1 bis 4, **dadurch gekennzeichnet, dass** die Signalsendeeinheit (33) eine Funkantenne (12) hat, welche die von dem beziehungsweise den Messwertaufnehmern (8, 15 bis 20) erhaltenen Signale an die elektronische Steuereinrichtung (34) weitergibt.

## Claims

1. Measuring arrangement for recording the rotational movement of a shaft (3) in a machine housing, having a multi-pole ring (7) which is connected to the shaft (3), at least one measuring sensor (8) which is present on the machine housing and interacts with the multi-pole ring (7), and a measuring transducer (14) which is connected to the measuring sensor (8), the measuring sensor(s) being designed to be supplied with current by at least one separate energy store, and the current for the energy store being generated by the multi-pole ring connected to the shaft in interaction with an opposite stator, **characterized in that** the measuring arrangement comprises further measuring sensors (15 to 20) which are used to measure the pressure (15, 16) and/or the temperature (17, 18) in the space (2) to be sealed and/or the environment (1) and/or the leakage (19) and/or the torque (20) and are integrally combined, with a regulator (10), an energy store (11), a transmitting unit (33) and the seal (31) resting against the shaft for the purpose of sealing the gap between the shaft and the machine housing, to form a structural unit (40).

2. Arrangement according to Claim 1, **characterized in that** the electrical current is regulated using a regulator (10) used in the circuit.

3. Arrangement according to either of Claims 1 and 2, **characterized in that** a signal transmitting unit (33) is provided for the purpose of wirelessly transmitting the measured values to a separate electronic control device (34).

4. Arrangement according to one of Claims 1 to 3, **characterized in that** a measuring transducer (14) is provided for the purpose of converting the sinusoidal measurement signal from the rotational movement of the shaft (3) into a yes/no signal.

5. Arrangement according to one of Claims 1 to 4, **characterized in that** the signal transmitting unit (33) has a radio antenna (12) which forwards the signals received from the measuring sensor(s) (8, 15 to 20) to the electronic control device (34).

## Revendications

1. Arrangement de mesure destiné à détecter le mouvement rotatif d'un arbre (3) dans un carter de machine, comprenant une bague multipolaire (7) reliée à l'arbre (3), au moins un transducteur de mesure (8) présent sur le carter de machine qui coopère avec la bague multipolaire (7) ainsi qu'un convertisseur de valeur mesurée (14) raccordé au transducteur de mesure (8), le ou les transducteurs de mesure étant configurés pour être alimentés en électricité par au moins un accumulateur d'énergie propre, et la production d'électricité pour l'accumulateur d'énergie s'effectuant par la bague multipolaire reliée à l'arbre en coopération avec un stator qui se trouve à l'opposé, **caractérisé en ce que** l'arrangement de mesure comprend des transducteurs de mesure (15 à 20) supplémentaires, lesquels servent à mesurer la pression (15, 16) et/ou la température (17, 18) dans un espace à rendre étanche (2) et/ou l'environnement (1) et/ou le taux de fuite (19) et/ou le couple (20), et sont regroupés intégralement en une unité modulaire (40) avec un régulateur (10), l'accumulateur d'énergie (11) et une unité d'émission (33) ainsi que la garniture d'étanchéité (31) appliquée sur l'arbre en vue de rendre étanche l'interstice entre l'arbre et le carter de machine.

2. Arrangement selon la revendication 1, **caractérisé en ce que** le courant électrique est régulé par le biais d'un régulateur (10) utilisé dans le circuit électrique.

3. Arrangement selon l'une des revendications 1 ou 2, **caractérisé en ce qu'**il existe une unité d'émission de signal (33) destinée à la communication sans fil des valeurs mesurées à un dispositif de commande électronique (34) présent séparément.

4. Arrangement selon l'une des revendications 1 à 3, **caractérisé en ce qu'**il existe un convertisseur de valeur mesurée (14) destiné à convertir le signal de mesure sinusoïdal résultant du mouvement rotatif de l'arbre (3) en un signal tout-ou-rien.

5. Arrangement selon l'une des revendications 1 à 4, **caractérisé en ce que** l'unité d'émission de signal (33) possède une antenne radioélectrique (12) qui retransmet au dispositif de commande électronique (34) les signaux obtenus de la part du ou des transducteurs de mesure (8, 15 à 20).
